# EUROPÄISCHE PATENTSCHRIFT

(11) **EP 1 106 577 B1**
(45) Veröffentlichungstag und Bekanntmachung des Hinweises auf die Patenterteilung: **24.08.2011**
(21) Anmeldenummer: 00125284.0
(22) Anmeldetag: 21.11.2000
(51) Int. Cl.: C01G 49/06, C09C 1/24

(54) **Verfahren zur Herstellung von Eisenoxidpigmenten**
Method of preparation for iron oxide pigments
Procédé de préparation de pigments à base d'oxide de fer

(30) Priorität: 02.12.1999 DE 19958168
(43) Veröffentlichungstag der Anmeldung: 13.06.2001
(73) Patentinhaber: LANXESS Deutschland GmbH, 51369 Leverkusen (DE)
(72) Erfinder: Etzenbach, Norbert, Dr., 50735 Köln (DE); Bütje, Kai, Dr., 47229 Duisburg (DE)

(56) Entgegenhaltungen:
- EP-A- 0 770 647
- DE-A- 2 249 274
- DATABASE CA [Online] CHEMICAL ABSTRACTS SERVICE, COLUMBUS, OHIO, US; SHEN, QING ET AL: "Preparation of crystal seeds of iron oxide red by nitric acid method and its effect on oxidation" retrieved from STN Database accession no. 128:218378 CA XP002228457 & WUJIYAN GONGYE (1997), (6), 5-6 ,
- M. OCAÑA, M.P. MORALES, C.J. SERNA: "The growth mechanism of alpha-Fe2O3 ellipsoidal particles in solution" JOURNAL OF COLLOIDAL AND INTERFACE SCIENCE, Bd. 171, Nr. 1, 1995, Seiten 85-91, XP002228456

## Beschreibung

Die vorliegende Erfindung betrifft ein Verfahren zur Herstellung farbreiner Eisenoxid-Rot-Pigmente sowie diese Pigmente und deren Verwendung.

Aus T:C.Patton, Pigment Handbook, Vol. 1, New York 1988 sind vier Verfahren zur Herstellung roter Eisenoxidpigmente bekannt geworden. Darüber hinaus ist durch in SHEN, Qing; SUN, Fengzhi; Wujiyan Gongye 1997, (6), 5 - 6 (CH), Wujiyan Gongye Bianjib, (CA 128:218378n) ein Verfahren bekannt geworden, bei dem verdünnte Salpetersäure bei erhöhter Temperatur auf elementares Eisen einwirkt. Hierbei entsteht eine Hämatitkeim-Suspension. Diese wird auf an sich bekannte Weise zu einer Suspension von Rotpigment aufgebaut, das Pigment wird aus dieser Suspension gewünschtenfalls auf an sich übliche Weise isoliert.

Die durch dieses Verfahren hergestellten Rotpigmente weisen jedoch eine vergleichsweise geringe Farbsättigung auf und finden ihren Einsatz deshalb vornehmlich in der Baustoffindustrie.

Aus M. Ocaña, M.P. Morales, C. J. Serna, Journal of Colloid and Interface Science 1995, 171, 85-91 ist die Bildung von Hematitkristallen durch Alterung von Eisennitrathaltigen, in salpetersauren Lösungen bekannt.

Die Patentschrift EP0770647 offenbart farbreine, gelbstichige Eisenoxid-Rot-Pigmente.

Der vorliegenden Erfindung lag daher die Aufgabe zugrunde, verbesserte Eisenoxid-Rot-Pigmente zur Verfügung zu stellen, die den Vorteil der durch Shen et al. beschriebenen präparativ einfachen Keimherstellung, nicht jedoch den Nachteil der unzureichenden Farbreinheit aufweisen.

Es wurde nun gefunden, daß die höheren Anforderungen des Marktes an Eisenoxid-Rot-Pigmente erfüllt werden, indem die Reaktionstemperatur der Keimbildung nicht wie von Shen et al. empfohlen bei 86°C, sondern größer 90°C gehalten wird.

Die auf Basis dieser Keime erhältlichen Pigmente zeigen in der Farbabtestung eine Farbsättigung (C*) von mehr als 39 CIELAB-Einheiten.

Gegenstand der vorliegenden Erfindung ist demnach ein Verfahren zur Herstellung von Eisenoxid-Rot-Pigmenten, in welchem man zunächst durch Einwirkung von verdünnter Salpetersäure auf elementares Eisen, vorzugsweise Eisenschrott, besonders bevorzugt in Form von Blechen, eine Keimsuspension von Hämatit erzeugt und anschließend die so erhaltenen Keime in Suspension in an sich bekannter Weise durch Reaktion mit Eisen(II)salz und Alkalihydroxid unter Einwirkung sauerstoffhaltiger Gase oder von elementarem Eisen, Eisen(II)salz und sauerstoffhaltigen Gasen zu einer Hämatit-Pigmentsuspension aufbaut und das in der Suspension enthaltene Pigment gegebenenfalls auf an sich bekannte Weise isoliert, welches dadurch gekennzeichnet ist, dass die Reaktionstemperatur bei der Einwirkung der verdünnten Salpetersäure auf das elementare Eisen von 95 °C bis 99 °C liegt.

In einer bevorzugten Ausführungsform des erfindungsgemäßen Verfahrens wird zur Herstellung der Keimsuspension
a) elementares Eisen in Wasser bei einer Reaktionstemperatur von 95°C bis 99°C vorgelegt,
b) mit Salpetersäure der Konzentration 2 bis 6 Gew.-% HNO₃ in einem
c) molaren Reaktionsverhältnis Fe : HNO₃ von 1,5 bis 16
zur Reaktion gebracht. Es resultiert eine rote Keimsuspension. Die suspendierten Partikel bestehen nach einer röntgenographischen Phasenanalyse ausschließlich aus Hämatit.

Die Pigmentbildung kann vorteilhaft auf zwei Weisen durchgeführt werden. Entweder wird der Keimsuspension metallisches Eisen und Eisen(II)salz zugesetzt, auf 70 bis 100°C, bevorzugt 75 bis 90°C aufgeheizt und mit 0,2 bis 501 Luft pro Stunde und Liter Suspension bis zum Erreichen des gewünschten Farbtons oxidiert, oder die Keimsuspension wird auf 70 bis 100°C, bevorzugt 75 bis 90°C aufgeheizt, Eisen(II)salz und Alkalilösung zudosiert und mit 1 bis 400 1 Luft pro Stunde und Liter Suspension bis zum Erreichen des gewünschten Farbtons oxidiert.

Nach Abtrennen der Salzlauge kann die Rotpaste zu Slurries verarbeitet oder getrocknet und zu einem pulverförmigen Pigment gemahlen werden. Man erhält weiche, farbreine Eisenoxidpigmente. Durch röntgenographische Phasenanalyse wird alpha-Fe₂O₃ nachgewiesen (ASTM-Nr.: 33.0664).

Ein weiterer. Gegenstand der vorliegenden Erfindung sind die Eisenoxid-Rot-Pigmente, welche dadurch gekennzeichnet sind, daß deren Farbsättigung C* in der Farbabtestung mehr als 39 CIELAB-Einheiten, bevorzugt mehr als 40 CIELAB-Einheiten beträgt.

Ein weiterer Gegenstand ist die Verwendung dieser Pigmente zur Einfärbung von Beton und Kunststoffen sowie von Farben und Lacken sowie die so eingefärbten bzw. beschichteten Substrate. Besonders bevorzugt werden Beton und Kunststoffextrudate sowie Autolacke mit den erfindungsgemäßen Pigmenten eingefärbt. Zu den Kunststoffextrudaten werden erfingdungsgemäß auch mit diesen Pigmenten gefärbte Toner für elektromechanische Druckverfahren verstanden, zu den Farben gehören Dispersionsfarben aber auch solche für Tintenstrahldrucker.

Die erfindungsgemässen Pigmente können auf an sich bekannte Weise granuliert werden und in dieser Form ihrer Anwendung zugeführt werden.

Die Farbabtestung der Pigmente für Anwendungen im Lackbereich erfolgte in Alkydal^{®} L 64 (Bayer AG, Leverkusen, DE; Alkydharz mit 63 % Leinöl und 23 % Phthalsäureanhydrid, dem zur Erhöhung der Viskosität 5 % Luvotix^{®} HT (Lehmann & Voss) hinzugefügt ist). Die Pigmentvolumen-Konzentration beträgt 10 %.

Die Bestimmung der CIELAB-Daten (DIN 6174) erfolgte mit einem Farbmeßgerät mit Ulbrichtkugel (Beleuchtungsbedingungen d/8°, Normlichtart C/2°) unter Einschluß der Oberflächenreflexion. Als Maß für die Farbreinheit der Pigmente gilt die Farbsättigung (C*).

### Beispiele

### Beispiel 1

1 773 g Eisenblech werden in 24 Wasser unter 300 l/h Stickstoffbegasung vorgelegt und auf 95°C erwärmt. 1 445,1 g 34,6 Gew.-%ige Salpetersäure werden in einer Stunde zugegeben. Es wird noch 30 Minuten reagieren gelassen. Es entsteht eine Suspension von Hämatit-Keimen. Die Keime werden nicht isoliert sondern die Suspension wird so wie sie anfällt weiter eingesetzt.

### Vergleichsbeispiel 2

685 g Fe-Blech , 70 g Fe₂O₃-Keim (Feststoff) aus Beispiel 1, 4 Liter Wasser und 175 g FeCl₂ werden unter 100 l/h N₂-Begasung mit 200 U/min gerührt und auf 70°C aufgeheizt. Die Begasung wird anschließend auf 100 l/h Luft umgestellt, und es wird 100 Stunden begast

### Vergleichsbeispiel 3

0,26 mol Fe₂O₃-Keim (Feststoff) aus Beispiel 1, 4,94 mol FeCl₂ und 6,3 Liter Wasser werden unter 100 L/h Stickstoffbegasung vorgelegt und auf 90°C erwärmt. Der pH-Wert wird in fünf Minuten mittels Natronlauge auf 2,0 eingestellt und durch Begasung mit 150 L/h Luft 15 Stunden bei diesem pH oxidiert.

| Tabelle 1 | Absolutwerte in L 64 Purton | | | |
|---|---|---|---|---|
| Typ Bezeichnung | L* | a* | b* | C* |
| Vergleichsbeispiel 2 | 42,2 | 30,6 | 26,9 | 40,8 |
| Vergleichsbeispiel 3 | 41,1 | 31,7 | 26,1 | 41,1 |
| 750/99/1 ¹⁾ | 41,2 | 28,8 | 22,2 | 36,4 |
| Bayferrox^{®} 4100²⁾ | 39,7 | 29,6 | 23,7 | 37,9 |

| | | | | |
|---|---|---|---|---|
| 1) Hämatit-Pigment, typische chinesische Handelsware. 2) Bayferrox^{®} 4100, Hämatit-Pigment, Bayer AG, Leverkusen, DE | | | | |

## Patentansprüche

1. Verfahren zur Herstellung von Eisenoxid-Rot-Pigmenten, in welchem man zunächst durch Einwirkung von verdünnter Salpetersäure auf elementares Eisen eine Keimsuspension von Hämatit erzeugt und anschließend die so erhaltenen Keime in Suspension durch Reaktion mit Eisen(II)salz und Alkalihydroxid unter Einwirkung sauerstoffhaltiger Gase oder von elementarem Eisen, Eisen(II)salz und sauerstoffhaltigen Gasen zu einer Hämatit-Pigmentsuspension aufbaut und das in der Suspension enthaltene Pigment gegebenenfalls auf an sich bekannte Weise isoliert, **dadurch gekennzeichnet, dass** die Reaktiönstemperatur bei der Einwirkung der verdünnten Salpetersäure auf das elementare Eisen von 95 °C bis 99 °C liegt.

2. Verfahren gemäß Anspruch 1, **dadurch gekennzeichnet, daß** die Konzentration der eingesetzten Salpetersäure 2 bis 6 Gew.-% HNO₃ beträgt.

3. Verfahren gemäß den Ansprüchen 1 und 2, **dadurch gekennzeichnet, daß** das molare Reaktionsverhältnis Fe : HNO₃ 1,5 bis 16 beträgt.

4. Verwendung der Pigmente hergestellt nach Ansprüchen 1 bis 3 zur Einfärbung von Beton.

5. Verwendung der Pigmente hergestellt nach Ansprüchen 1 bis 3 zur Einfärbung von Kunststoffen.

6. Verwendung der Pigmente hergestellt nach Ansprüchen 1 bis 3 zur Einfärbung von Farben und Lacken.

## Claims

1. Process for preparing iron oxide red pigments which comprises first producing a suspension of haematite nuclei through action of dilute nitric acid on elemental iron and then the nuclei thus obtained being grown in suspension by reaction with iron(II) salt and alkali metal hydroxide under action of oxygen-containing gases or of elemental iron, iron(II) salt and oxygen-containing gases into a haematite pigment suspension and optionally isolating the pigment in the suspension in a conventional manner, **characterized in that** the reaction temperature involved in the action of the dilute nitric acid on the elemental iron is from 95°C to 99°C.

2. Process according to Claim 1, **characterized in that** the concentration of the nitric acid to be used is 2 to 6 wt.% HNO₃.

3. Process according to Claims 1 and 2, **characterized in that** the molar reaction ratio Fe:HNO₃ is in the range from 1.5 to 16.

4. Use of the pigments obtained according to Claims 1 to 3 for coloration of concrete.

5. Use of the pigments obtained according to Claims 1 to 3 for coloration of plastics.

6. Use of the pigments obtained according to Claims 1 to 3 for coloration of paints and lacquers.

## Revendications

1. Procédé de fabrication de pigments rouges d'oxyde de fer, selon lequel une suspension de germes d'hématite est tout d'abord formée par l'action d'acide nitrique dilué sur du fer élémentaire, puis les germes en suspension ainsi obtenus sont mis sous la forme d'une suspension pigmentaire d'hématite par réaction avec un sel de fer (II) et un hydroxyde alcalin sous l'action de gaz contenant de l'oxygène ou de fer élémentaire, d'un sel de fer (II) et de gaz contenant de l'oxygène, et le pigment contenu dans la suspension est éventuellement isolé d'une manière connue en soi, **caractérisé en ce que** la température de réaction lors de l'action de l'acide nitrique dilué sur le fer élémentaire se situe de 95 °C à 99 °C.

2. Procédé selon la revendication 1, **caractérisé en ce que** la concentration de l'acide nitrique utilisé est de 2 à 6 % en poids d'HNO₃.

3. Procédé selon les revendications 1 et 2, **caractérisé en ce que** le rapport réactionnel molaire Fe:HNO₃ est de 1,5 à 16.

4. Utilisation des pigments fabriqués selon les revendications 1 à 3 pour la coloration de béton.

5. Utilisation des pigments fabriqués selon les revendications 1 à 3 pour la coloration de plastiques.

6. Utilisation des pigments fabriqués selon les revendications 1 à 3 pour la coloration de colorants et de laques.
